# EUROPÄISCHE PATENTSCHRIFT

(11) **EP 2 918 393 B1**
(45) Veröffentlichungstag und Bekanntmachung des Hinweises auf die Patenterteilung: **04.08.2021**
(21) Anmeldenummer: 14159703.9
(22) Anmeldetag: 14.03.2014
(51) Int. Cl.: F21V 15/01

(54) **Beleuchtungsvorrichtung, Gehäuseschale für eine Beleuchtungsvorrichtung und Herstellungsverfahren für eine Beleuchtungsvorrichtung**
Lighting device, housing shell for a lighting device and manufacturing method for a lighting device
Dispositif d'éclairage, coque de boîtier pour un dispositif d'éclairage et procédé de fabrication pour un dispositif d'éclairage

(43) Veröffentlichungstag der Anmeldung: 16.09.2015
(73) Patentinhaber: LUNUX Lighting GmbH, 30173 Hannover (DE)
(72) Erfinder: Günter, Anna, 59557 Lippstadt (DE); Kerpe, Alexander, 59555 Lippstadt (DE); Oesterwiemann, Tobias, 33397 Rietberg (DE)
(74) Vertreter: Reichert & Lindner Partnerschaft Patentanwälte

(56) Entgegenhaltungen:
- EP-A1- 2 306 068
- WO-A1-2013/007450
- DE-A1-102011 051 047

## Beschreibung

Die Erfindung betrifft eine Beleuchtungsvorrichtung mit einem mehrteiligen Gehäuse, mit wenigstens einer Lichtquelle und mit einem die wenigstens eine Lichtquelle tragenden Schaltungsträger, welcher zusammen mit der wenigstens einen Lichtquelle von dem Gehäuse umschlossen ist, wobei das Gehäuse eine erste Gehäuseschale vorsieht, an die der Schaltungsträger angelegt ist und an der mindestens ein Positioniermittel vorgesehen ist, über das der Schaltungsträger relativ zu der ersten Gehäuseschale positioniert ist, wobei das Gehäuse eine zweite Gehäuseschale vorsieht, welche randseitig, jedenfalls abschnittsweise, einen der ersten Gehäuseschale zugewandten stegförmigen Verbindungsabschnitt aufweist, und wobei die erste Gehäuseschale und die zweite Gehäuseschale im Bereich des stegförmigen Verbindungsbereichs bevorzugt stoffschlüssig miteinander verbunden sind.

Ferner betrifft die Erfindung ein Herstellungsverfahren für eine Beleuchtungsvorrichtung, eine Gehäuseschale für eine Beleuchtungsvorrichtung sowie die Verwendung der Gehäuseschale für eine erfindungsgemäße Beleuchtungsvorrichtung.

Die Europäische Patentanmeldung EP 2 306 068 A1 offenbart eine Beleuchtungseinrichtung, bei der eine LED-Platine und ein wärmeleitendes Element zuverlässig in engem Kontakt gehalten werden, um die Wärmeableitungseffizienz zu verbessern. Hinzu kommt die zuverlässige Positionierung der LEDs zu einem optischen Element, das ein Linsenteil ist. In einem Gehäuse sind zumindest die LED-Platine (2) und das wärmeleitende Element angeordnet.

Die internationale Patentanmeldung WO 2013/007450 A1 offenbart eine lichtemittierende Vorrichtung mit einer Abdeckung, einem Kühlkörper und einer lichtemittierenden Anordnung. Es sind Verriegelungsteile vorgesehen, die den Kühlkörper gegen die lichtemittierende Anordnung drücken.

Die deutsche Offenlegungsschrift DE 10 2011 051 047 A1 offenbart eine Beleuchtungseinrichtung mit einem auf einer Leiterplatte angeordnetem Leuchtmittel und einem Kühlkörper. Der Kühlkörper ist flächig wärmeleitend mit der Leiterplatte verbunden. Die Wärmeeinkoppelfläche des Kühlkörpers ist derart gekrümmt und die Leiterplatte ist mit Hilfe von Verbindungselementen derart mit dem Kühlkörper verspannt, dass die Leiterplatte gegen eine Rückstellkraft flächig an die Wärmeeinkoppelfläche des Kühlkörpers angedrückt wird.

Im Bereich der Beleuchtungsvorrichtungen ist allgemein bekannt, ein mehrteiliges Gehäuse mit wenigstens zwei Gehäuseschalen vorzusehen, wobei die Gehäuseschalen im Zuge der Montage der Beleuchtungsvorrichtung mittels Vibrationsschweißens stoffschlüssig verbunden werden. Insbesondere wird ein Gehäuse im Bereich der Schweißnaht dicht ausgebildet, sodass einem Eintrag von Feuchtigkeit beziehungsweise Staub vorgebeugt wird. Ebenfalls ist bekannt, einen Schaltungsträger für wenigstens eine Lichtquelle der Beleuchtungsvorrichtung an einer Gehäuseschale festzulegen und über Positioniermittel, insbesondere Positionierstifte, zu positionieren. Gehäusekörper positionierten Kühlkörper angelegt und an einer konkav geformten Innenwandung des Gehäuseskörpers positioniert. Ein Optikkörper überdeckt die Lichtquellen. Er stützt sich an dem Schaltungsträger einerseits und dem Gehäusekörper andererseits ab. Zusammen mit dem Gehäusekörper definiert er einen die Lichtquellen, den Schaltungsträger und den Kühlkörper aufnehmenden Lichtraum der Beleuchtungsvorrichtung.

Aufgabe der vorliegenden Erfindung ist es, eine Beleuchtungsvorrichtung konstruktiv besonders einfach auszubilden und die Herstellung einer Beleuchtungsvorrichtung zu vereinfachen.

Zur Lösung der Aufgabe weist die Erfindung die Merkmale des Patentanspruchs 1 auf.

Der besondere Vorteil der Erfindung besteht darin, dass durch das Vorsehen von wenigstens zwei Kontaktelementen an der zweiten Gehäuseschale eine Festlegung des Schaltungsträgers an der ersten Gehäuseschale bewirkt wird und demzufolge auf separate Befestigungsmittel für den Schaltungsträger, beispielsweise Schrauben oder Klebstoff, verzichtet werden kann. Die Beleuchtungsvorrichtung kann demzufolge konstruktiv besonders einfach ausgeführt werden. Darüber hinaus vereinfacht sich die Montage, da beim Verbinden der Gehäuseschalen zugleich auch der Schaltungsträger festgelegt ist.

Insbesondere kann nach der Erfindung vorgesehen sein, dass an der ersten Gehäuseschale eine Mehrzahl von Positioniermitteln vorgesehen ist, welche nach Art von Positionierstiften ausgebildet sind. Korrespondierend zur Anzahl und Lage der Positionierstifte können an dem Schaltungsträger Durchlassöffnungen vorgesehen sein, welche zur Durchführung beziehungsweise Aufnahme der Positionierstifte vorgesehen sind. Insofern folgt die Positionierung des Schaltungsträgers an der ersten Gehäuseschale in an sich bekannter Weise. Beispielsweise wird eine erste Durchlassöffnung an dem Schaltungsträger nach Art einer Bohrung ausgebildet mit einem im Wesentlichen kreisförmigen Querschnitt. Weitere Durchlassöffnungen können nach Art von Langlöchern ausgebildet sein, sodass die Positionierstifte in den weiteren Durchlassöffnungen spielbehaftet geführt sind und der Schaltungsträger sich thermisch ausdehnen kann. Insbesondere erstrecken sich die langlochförmigen weiteren Durchlassöffnungen in eine Längsrichtung der Beleuchtungsvorrichtung, da eine Wärmeausdehnung des Schaltungsträgers in seine Längsrichtung besonders groß ist.

In der DE 10 2011 051047 A1 wird vorgeschlagen den Wärmeübergangswiderstand zwischen einer Leiterplatte einer Beleuchtungseinrichtung und einer Wärmeeinkoppelfläche eines Kühlkörpers der Beleuchtungseinrichtung dadurch zu reduzieren, dass die Wärmeeinkoppelfläche zylindrisch konvex ist und dass die Leiterplatte an ihren Randbereichen gegen die Wärmeeinkoppelfläche verspannt wird, so dass sie flächig an der gekrümmten Wärmeeinkoppelfläche anliegt. Nach der Erfindung ist vorgesehen, dass mindestens zwei an der zweiten Gehäuseschale vorgesehenen Kontaktelemente benachbart zu dem Positioniermittel der ersten Gehäuseschale vorgesehen sind. Vorteilhaft wird der Schaltungsträger demzufolge im Bereich des Positioniermittels festgelegt. Montagetoleranzen werden hierdurch reduziert und eine korrekte Positionierung der optisch wirksamen Funktionskomponenten zueinander gewährleistet. Insbesondere kann vorgesehen sein, dass ein seitlicher Abstand des Positioniermittels zu dem Kontaktelement weniger als 1 cm, bevorzugt weniger als 0,5 cm und besonders bevorzugt 2 mm oder weniger beträgt.

Dem Positioniermittel sind seitlich benachbart wenigstens zwei Kontaktelemente zugeordnet, welche paarweise angeordnet sind. Das Positioniermittel ist hierbei zwischen den einander paarweise zugeordneten Kontaktelementen vorgesehen. Vorteilhaft ergibt sich durch das paarweise Vorsehen der Kontaktelemente eine gleichmäßige Festlegung des Schaltungsträgers an der ersten Gehäuseschale. Einer schädlichen Verspannung beziehungsweise Biegung des Schaltungsträgers ist damit weitgehend vorgebeugt.

Zur Lösung der Aufgabe weist ein erfindungsgemäßes Herstellungsverfahren für eine Beleuchtungsvorrichtung die Merkmale des Patentanspruchs 8 auf.

Der besondere Vorteil des erfindungsgemäßen Verfahrens besteht darin, dass im Zuge des ohnehin vorzusehenden Verbindens der Gehäuseschalen mittels Vibrationsschweißens zugleich der Schaltungsträger von wenigstens zwei Kontaktelemente festgelegt wird.

Die Verbindung zwischen der ersten Gehäuseschale und der zweiten Gehäuseschale wird im Bereich eines bevorzugt stegförmig ausgebildeten Verbindungsabschnitts hergestellt. Der Verbindungsabschnitt ist beispielsweise umlaufend realisiert, sodass die erste Gehäuseschale am gesamten Umfang mit der zweiten Gehäuseschale verschweißt wird.

Wenigstens zwei Kontaktelemente sind an der zweiten Gehäuseschale vorgesehen, wobei an der ersten Gehäuseschale eine Anlagefläche für den Schaltungsträger vorgesehen ist und der Schaltungsträger von dem Kontaktelement gegen die Anlagefläche der ersten Gehäuseschale gedrückt wird. Eine Positionierung des Schaltungsträgers zur ersten Gehäuseschale erfolgt über geeignete Positioniermittel. beispielsweise über an der ersten Gehäuseschale vorgesehene Positionierstifte und korrespondierende, an dem Schaltungsträger vorgesehene Durchlassöffnungen für die Positionierstifte.

Nach einer Weiterbildung der Erfindung kann insbesondere vorgesehen sein, dass die wenigstens zwei Kontaktelemente infolge des Vibrationsschweißprozesses beim Kontakt mit dem Schaltungsträger an einer dem Schaltungsträger zugewandten Stirnseite aufschmilzt und sich während des Vibrationsschweißens eine Dickenabmessung der Kontaktelementen reduziert. Die aufgeschmolzenen Kontaktelemente legen sich flächig an den Schaltungsträger an. Vorteilhaft ergibt sich hierdurch eine besonders gute und zuverlässige Festlegung des Schaltungsträgers mithilfe der Kontaktelemente. Der flächige Kontakt stellt sicher, dass keine zulässig hohen Flächenpressungen auftauchen. Zugleich können Unebenheiten und Fertigungstoleranzen insbesondere aufseiten der Kontaktelemente ausgeglichen und eine stets reproduzierbare Festlegung des Schaltungsträgers erreicht werden.

Die Materialpaarung zwischen den Kontaktelementen einerseits und dem Schaltungsträger andererseits kann insbesondere so gewählt werden, dass die Kontaktelemente während des Vibrationsschweißens aufschmelzen und dass es gleichwohl nicht zu einer stoffschlüssigen Verbindung der Kontaktelemente mit dem Schaltungsträger kommt.

Beispielsweise kann der Schaltungsträger beschichtet ausgebildet sein, um einer stoffschlüssigen Verbindung mit den Kontaktelementen entgegenzuwirken. Insofern ist gewährleistet, dass der Schaltungsträger auch nach dem Verbinden der Gehäuseschalen sich thermisch ausdehnen kann und relativ beweglich zu den Kontaktelementen festgelegt wird.

Nach einer Weiterbildung der Erfindung ist der Vibrationsschweißprozess insbesondere zweistufig ausgebildet. In einem ersten Prozessschritt wird die zweite Gehäuseschale im Bereich des Verbindungsabschnitts aufgeschmolzen und mit der ersten Gehäuseschale stoffschlüssig verbunden. Die Kontaktelemente nähren sich hierbei dem Schaltungsträger an. Sobald die Kontaktelemente den Schaltungsträger berühren und diesen gegen die erste Gehäuseschale gedrückt hat, werden in einem zweiten Prozessschritt die Kontaktelemente im Bereich der dem Schaltungsträger zugewandten Stirnseite infolge der Vibrationsschwingungen aufgeschmolzen. Zugleich wird die Verschweißung der zweiten Gehäuseschale mit der ersten Gehäuseschale während des zweiten Prozessschritts fortgesetzt. Vorteilhaft bewirkt die Zweistufigkeit des Prozesses, dass zunächst die Gehäuseschalen miteinander verbunden und einander angenähert werden. Der Schaltungsträger wird dabei sukzessive an die erste Gehäuseschale angenähert und positioniert. Sobald der Schaltungsträger an der ersten Gehäuseschale anliegt und die Kontaktelemente den Schaltungsträger berührt, wird dieser festgelegt. Die Zweistufigkeit begünstigt demzufolge die exakte Positionierung des Schaltungsträgers an der ersten Gehäuseschale.

Nach einer Weiterbildung der Erfindung ist vorgesehen, dass die Gehäuseschalen bei einer Frequenz von 240 Hz oder mehr vibrationsverschweißt werden. Es handelt sich hierbei um ein im industriellen Umfeld lange erprobtes Verfahren, welches prozessseitig gut beherrschbar ist und zu einer zuverlässigen und dauerhaften stoffschlüssigen Verbindung der Gehäuseschalen führt. Insbesondere werden beim Vibrationsverschweißen Schwingweiten von 0,8 bis 1,8 mm aufgeprägt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Beleuchtungsvorrichtung gelten selbstverständlich auch im Zusammenhang mit dem erfindungsgemäßen Herstellungsverfahren sowie umgekehrt.

Anhand der beigefügten Zeichnungen wird die Erfindung nachfolgend näher erläutert. Dabei zeigt:
- Fig. 1: eine perspektivische Seitenansicht einer erfindungsgemäßen Beleuchtungsvorrichtung,
- Fig. 2: eine Explosionsdarstellung einzelner Komponenten der Beleuchtungsvorrichtung nach Fig. 1,
- Fig. 3: eine Detailansicht einer ersten Gehäuseschale der Beleuchtungsvorrichtung nach Fig. 1,
- Fig. 4: eine Detailansicht eines Schaltungsträgers der Beleuchtungsvorrichtung nach Fig. 1,
- Fig. 5: eine zweite Gehäuseschale der Beleuchtungsvorrichtung nach Fig. 1,
- Fig. 6: einen ersten Verfahrensschritt beim Verbinden der ersten Gehäuseschale mit der zweiten Gehäuseschale,
- Fig. 7: einen zweiten Verfahrensschritt beim Verbinden der ersten Gehäuseschale mit der zweiten Gehäuseschale und
- Fig. 8: einen dritten Verfahrensschritt beim Verbinden der ersten Gehäuseschale mit der zweiten Gehäuseschale.

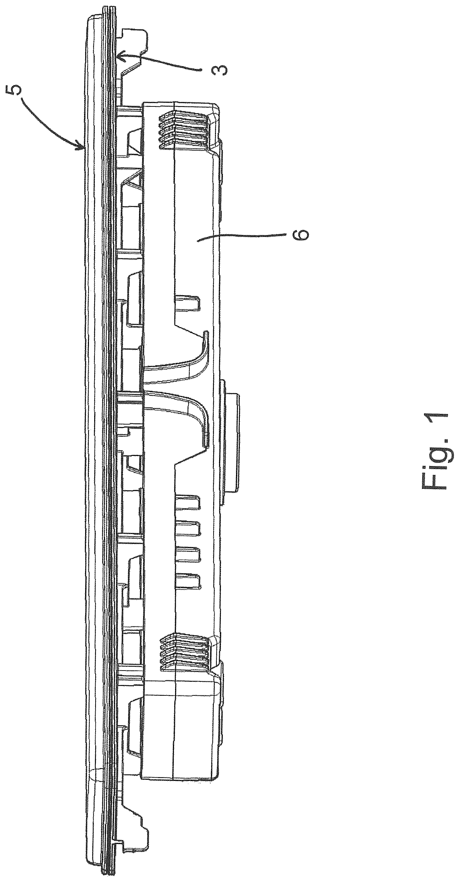

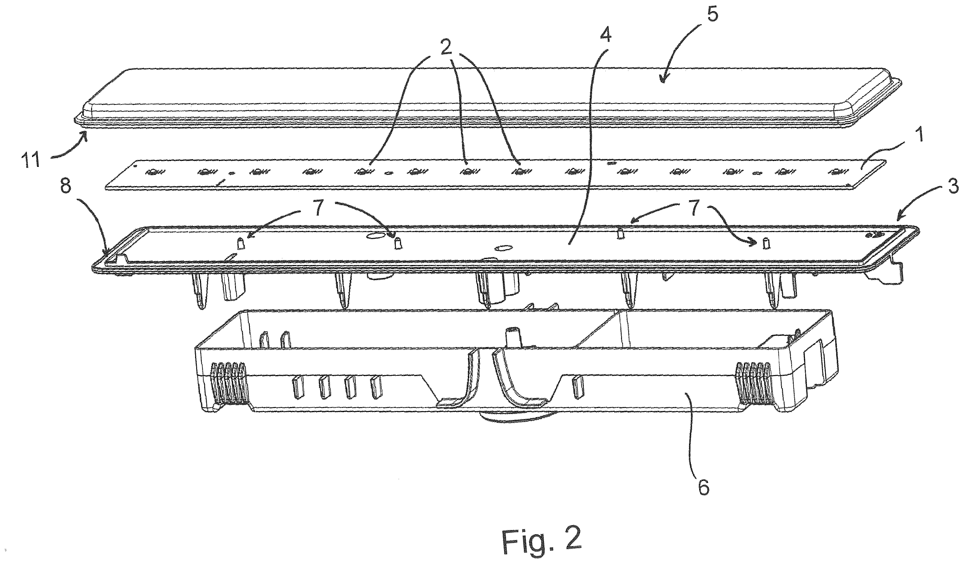

Eine erfindungsgemäße Beleuchtungsvorrichtung nach den Fig. 1 und 2 weist als wesentliche Funktionskomponenten einen Schaltungsträger 1 mit einer Mehrzahl von daran festgelegten Lichtquellen 2, eine erste Gehäuseschale 3 mit einer Anlagefläche 4 für den Schaltungsträger 1, eine nach Art einer Abschlussscheibe ausgebildete zweite Gehäuseschale 5 sowie ein nicht dargestelltes elektrisches Vorschaltgerät zum Ansteuern der Lichtquellen 2 und ein Vorschaltgehäuse 6 auf. In dem Vorschaltgehäuse 6, welches beispielsweise wannenförmig ausgebildet und eine der ersten Gehäuseschale zugewandte Öffnung aufweist, ist das nicht dargestellte Vorschaltgerät beispielsweise vergossen vorgesehen. Als Teil der ersten Gehäuseschale 3 sind auf einer der Anlagefläche 4 abgewandten Seite Trägerelemente ausgebildet, welche dazu dienen, die erste Gehäuseschale 3 an das Vorschaltgehäuse 6 anzulegen und relativ zu demselben zu positionieren. Beispielsweise werden die erste Gehäuseschale 3 und das Vorschaltgehäuse 6 stoffschlüssig miteinander verbunden.

Die erfindungsgemäße Beleuchtungsvorrichtung sieht als Lichtquellen 2 beispielsweise eine Mehrzahl von Hochleistungs-LED vor. Die Beleuchtungsvorrichtung kann beispielsweise nach Art einer Außenleuchte oder nach Art einer Industrieleuchte ausgebildet sein.

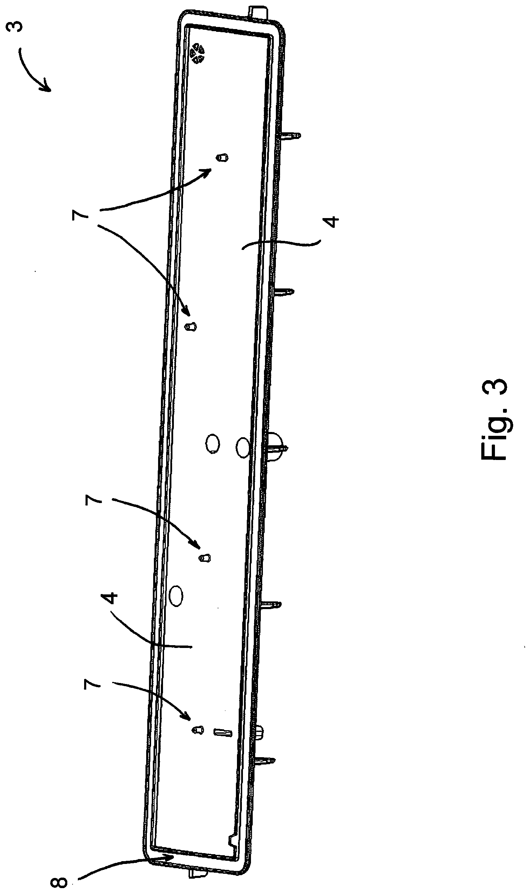

Im Bereich der Anlagefläche 4 ist an der ersten Gehäuseschale 3 eine Mehrzahl von Positioniermitteln 7 vorgesehen, vergleiche. Fig. 3. Die Positioniermittel 7 sind nach Art von Positionierstiften 7 ausgebildet. Sie ragen von der ebenen Anlagefläche im Wesentlichen senkrecht ab. Randseitig umgibt die Anlagefläche 4 ein umlaufender Anlageabschnitt 8, welcher dazu dient, die erste Gehäuseschale 3 mit der zweiten Gehäuseschale 5 zu verbinden.

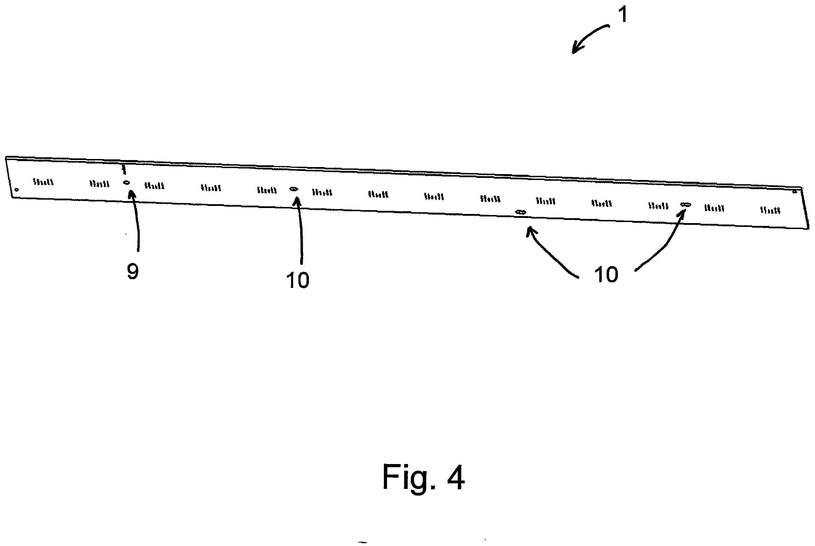

An die Anlagefläche 4 der ersten Gehäuseschale 3 wird der Schaltungsträger 1 angelegt. Wie insbesondere Fig. 4 zeigt, ist der Schaltungsträger 1 nach Art einer Platine ausgebildet. An dem Schaltungsträger 1 sind Durchlassöffnungen 9, 10 vorgesehen. Die Durchlassöffnungen 9, 10 sind korrespondierend zu den Positionierstiften 7 der ersten Gehäuseschale 3 vorgesehen. Insbesondere wird der Schaltungsträger 1 so in die Anlagefläche 4 der ersten Gehäuseschale 3 angelegt, dass die Positionierstifte 7 durch die Durchlassöffnungen 9, 10 geführt sind. Eine erste Durchlassöffnung 9 ist im Querschnitt kreisförmig ausgebildet. Ein Bohrungsdurchmesser der ersten Durchlassöffnung 9 ist so auf eine Außenabmessung der Positionierstifte 7 abgestimmt, dass der zugeordnete Positionierstift 7 im Wesentlichen spielfrei in die Durchlassöffnung 9 eingesetzt wird. Die weiteren Durchlassöffnungen 10 sind nach Art von Langlöchern ausgebildet. Die Positionierstifte 7 werden in den weiteren Durchlassöffnungen 10 spielbehaftet geführt. Hierdurch ist gewährleistet, dass sich der Schaltungsträger 1 infolge einer thermischen Belastung ausdehnen kann.

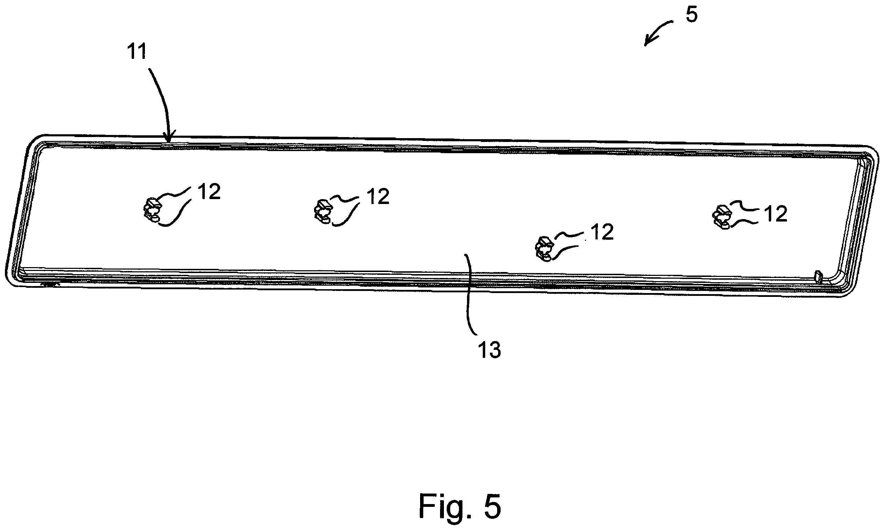

Die zweite Gehäuseschale 5 ist nach Art einer Abschlussscheibe ausgebildet. Durch die zweite Gehäuseschale 5 wird das Licht der Lichtquellen 2 abgestrahlt. Wie Fig. 5 zeigt, ist an der zweiten Gehäuseschale 5 randseitig ein stegförmiger Verbindungsabschnitt 11 ausgebildet, welcher so dimensioniert und geformt ist, dass die zweite Gehäuseschale 5 mit dem stegförmigen Verbindungsabschnitt 11 im Bereich des Anlageabschnitts 8 an die erste Gehäuseschale 3 angesetzt werden kann. Zusätzlich ist an der zweiten Gehäuseschale 5 eine Mehrzahl von Kontaktelementen 12 vorgesehen, welche im Wesentlichen senkrecht von einer transparenten Lichtdurchtrittsfläche 13 der zweiten Gehäuseschale 5 abragen. Die Kontaktelemente 12 sind halbmondförmig beziehungsweise stegartig ausgebildet. Eine freie, der Lichtdurchtrittsfläche 13 abgewandte Stirnseite der Kontaktelemente 12 verjüngt sich keilförmig.

Insgesamt sind acht Kontaktelemente 12 im Bereich der Lichtdurchtrittsfläche 13 verteilt angeordnet. Jeweils zwei Kontaktelemente 12 sind einander paarweise zugeordnet, sodass sich im Bereich der Lichtdurchtrittsfläche 13 verteilt vier Kontaktelementpaare finden. Die Kontaktelementpaare sind korrespondierend zu den Positionierstiften 7 der ersten Gehäuseschale 3 und den Durchlassöffnungen 9, 10 des Schaltungsträgers 1 vorgesehen.

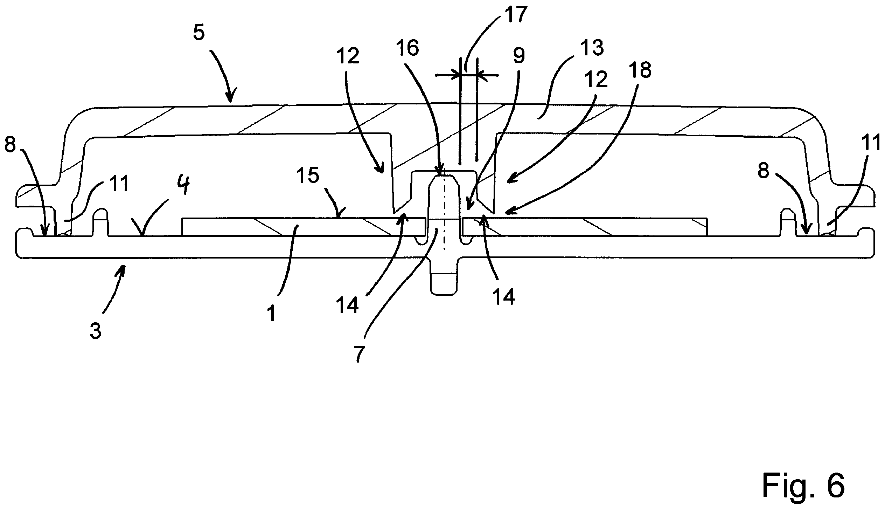

Die Fig. 6 bis 8 zeigen die verschiedenen Schritte bei der Herstellung der Beleuchtungsvorrichtung beziehungsweise zum Verbinden der ersten Gehäuseschale 3 mit der zweiten Gehäuseschale 5. In einer Ausgangsposition wird die zweite Gehäuseschale 5 mit dem Verbindungsabschnitt 11 an den Anlageabschnitt 8 der ersten Gehäuseschale 3 angelegt. Zwei einander paarweise zugeordneten Kontaktelemente 12 sind seitlich benachbart zu dem Positionierstift 7 vorgesehen. Der Schaltungsträger 1 ist flächig an die Anlagefläche 4 der ersten Gehäuseschale 3 angelegt. Der Positionierstift 7 ist dabei durch eine korrespondierende Durchlassöffnung 9 geführt und zwischen den Kontaktelementen 12 vorgesehen.

In der Ausgangskonfiguration ist eine Stirnseite 14 der Kontaktelemente 12 beabstandet zu dem Schaltungsträger 1 vorgesehen. Ein Kontakt zwischen der Stirnseite 14 und einer der Stirnseite 14 zugewandten Flachseite 15 des Schaltungsträgers 1 ist nicht ausgebildet. Ebenso ist der Positionierstift 7 beabstandet von der zweiten Gehäuseschale 5 vorgesehen. Wird nunmehr eine Ultraschallschwingung aufgeprägt und die erste Gehäuseschale 3 gegen die zweite Gehäuseschale 5 gedrückt, schmilzt die zweite Gehäuseschale 5 im Bereich des Verbindungsabschnitts 11 auf und es verbinden sich die Gehäuseschalen 3, 5 im Bereich des Verbindungsabschnitts 11 formschlüssig.

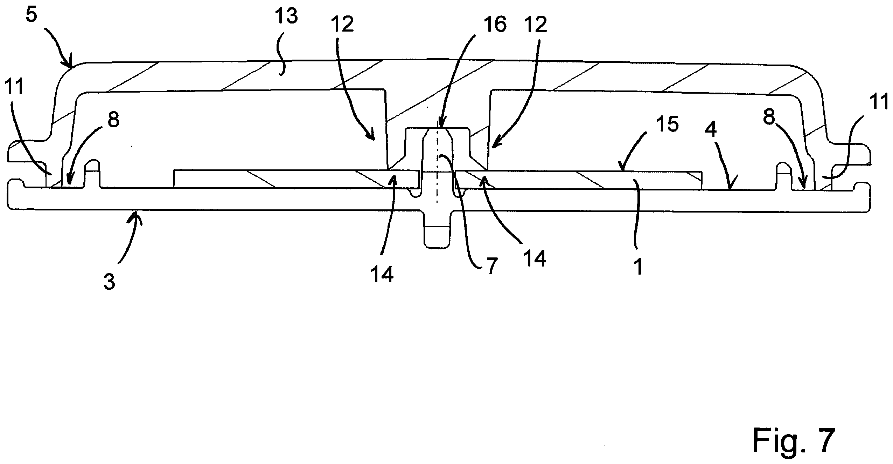

Fig. 7 zeigt eine Zwischenstufe des Fügeprozesses. Die Darstellung nach Fig. 7 ist so gewählt, dass eine Verbindung der ersten Gehäuseschale 3 mit der zweiten Gehäuseschale 5 im Bereich des Verbindungsabschnitts 11 ausgebildet ist und die keilförmige Stirnseite 14 erstmalig mit der Flachseite 15 des Schaltungsträgers 1 in Kontakt tritt. Zeitgleich bildet sich ein Kontakt zwischen einer Stirnfläche 16 des Positionierstifts 7 mit der zweiten Gehäuseschale 5 aus.

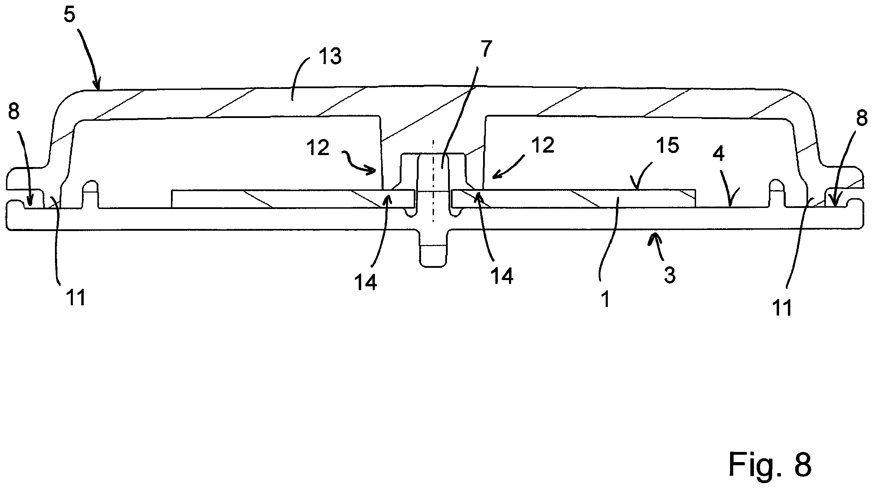

Wird das Gehäuse 3, 5 unverändert zu Vibrationsschwingungen angeregt und die Gehäuseschale 3 gegen die zweite Gehäuseschale 5 gedrückt, wird die zweite Gehäuseschale 5 im Bereich des Verbindungsabschnitts 11 weiter aufgeschmolzen. Zudem schmelzen die Kontaktelemente 12 im Bereich der Stirnseite 14 auf und legen sich flächig an die Flachseite 15 des Schaltungsträgers 1 an, vergleiche Fig. 8. Ebenso schmilzt die Stirnfläche 16 des Positionierstifts 7. Infolge der Materialwahl kommt es zu einer schlüssigen Verbindung im Bereich des Verbindungsabschnitts 11 und des Anlageabschnitts 8 einerseits und im Bereich der Stirnfläche 16 mit der zweiten Gehäuseschale 5. Die erste Gehäuseschale 3 und die zweite Gehäuseschale 5 sind insofern beispielsweise jeweils für sich aus einem gleichen Werkstoff hergestellt, wobei sich die jeweilige Werkstoffpaarung bei der jeweiligen Prozessführung stoffschlüssig verbindet.

Insbesondere zwischen dem Schaltungsträger 1 und der Stirnseite 14 der Kontaktelemente 12 kommt es vorliegend nicht zu einer stoffschlüssigen Verbindung. Beispielsweise ist das Material des Schaltungsträgers 1 so gewählt, dass die Stirnseiten 14 der Kontaktelemente 12 infolge der Vibrationsschwingung aufschmelzen, ohne eine stoffschlüssige Verbindung mit dem Schaltungsträger 1 einzugehen. Beispielsweise kann der Schaltungsträger 1 beschichtet ausgeführt sein. Gleichwohl wird die zumindest keilförmige Stirnseite 14 der Kontaktelemente 12 eingeebnet, sodass die Kontaktelemente 12 den Schaltungsträger 1 im Bereich der Stirnseite 14 flächig gegen die Anlagefläche 4 festlegen.

Ein seitlicher Abstand 17 zwischen den Kontaktelementen 12 und dem Positionierstift 7 ist nach der Erfindung bevorzugt kleiner als 1 cm. Der seitliche Abstand 17 beträgt bevorzugt 0,5 cm oder weniger. Der Abstand 17 beträgt vorliegend 1,5 mm. Ein Abstandsmaß 18 zwischen der Stirnseite 14 der Kontaktelemente 12 und der Flachseite 15 des Schaltungsträgers 1 ist vor dem Verbinden der ersten Gehäuseschale 3 mit der zweiten Gehäuseschale 5 beispielsweise bevorzugt 0,4 mm oder weniger.

### Bezugszeichenliste

- 1: Schaltungsträger
- 2: Lichtquelle
- 3: erste Gehäuseschale
- 4: Anlagefläche
- 5: zweite Gehäuseschale
- 6: Vorschaltgehäuse
- 7: Positioniermittel
- 8: Anlageabschnitt
- 9: Durchlassöffnung
- 10: Durchlassöffnung
- 11: Verbindungsabschnitt
- 12: Kontaktelement
- 13: Lichtdurchtrittsfläche
- 14: Stirnseite
- 15: Flachseite
- 16: Stirnfläche
- 17: seitlicher Abstand
- 18: Abstandsmaß

## Patentansprüche

1. Beleuchtungsvorrichtung mit einem mehrteiligen Gehäuse, mit wenigstens einer Lichtquelle (2) und mit einem die wenigstens eine Lichtquelle (2) tragenden Schaltungsträger (1), welcher zusammen mit der wenigstens einen Lichtquelle (2) von dem Gehäuse umschlossen ist, wobei das Gehäuse eine erste Gehäuseschale (3) vorsieht, an die der Schaltungsträger (1) angelegt ist und an der mindestens ein Positioniermittel (7) vorgesehen ist, über das der Schaltungsträger (1) relativ zu der ersten Gehäuseschale (3) positioniert ist, wobei das Gehäuse eine zweite Gehäuseschale (5) vorsieht, welche randseitig, jedenfalls abschnittsweise, einen der ersten Gehäuseschale (3) zugewandten stegförmigen Verbindungsabschnitt (11) aufweist, und wobei die erste Gehäuseschale (3) und die zweite Gehäuseschale (5) im Bereich des stegförmigen Verbindungsbereichs bevorzugt stoffschlüssig miteinander verbunden sind, **dadurch gekennzeichnet, dass**
• an der zweiten Gehäuseschale (5) mindestens zwei Kontaktelemente (12) vorgesehen sind, welches derart angeordnet und dimensioniert sind, dass die Kontaktelemente (12) den Schaltungsträger (1) mit der wenigstens einen Lichtquelle (2) gegen die erste Gehäuseschale (3) drücken,
• dem Positioniermittel seitlich benachbart wenigstens zwei Kontaktelemente paarweise zugeordnet sind, und
• das Positioniermittel (7) zwischen den zwei einander paarweise zugeordneten Kontaktelementen (12) vorgesehen ist.

2. Beleuchtungsvorrichtung nach Anspruch 1, **dadurch gekennzeichnet, dass** ein seitlicher Abstand (17) des Positioniermittels (7) zu den Kontaktelementen (12) weniger als 1 cm, bevorzugt weniger als 0,5 cm, beträgt.

3. Beleuchtungsvorrichtung nach einem der Ansprüche 1 oder 2, **dadurch gekennzeichnet, dass** das an der ersten Gehäuseschale (3) vorgesehene Positioniermittel (7) nach Art eines Positionierstifts (7) ausgebildet ist und dass an dem Schaltungsträger (1) eine Durchlassöffnung (9, 10) vorgesehen ist zum Aufnehmen des Positionierstifts (7).

4. Beleuchtungsvorrichtung nach einem der vorangehenden Ansprüche, **dadurch gekennzeichnet, dass** an der ersten Gehäuseschale (3) eine Mehrzahl von Positionierstiften (7) vorgesehen ist und dass an dem Schaltungsträger (1) eine Mehrzahl von Durchlassöffnungen (9,10) ausgebildet ist, wobei eine erste Durchlassöffnung (9) nach Art einer Bohrung ausgebildet ist, mit einem Bohrungsdurchmesser, welcher auf die Dimension eines zugeordneten Positionierstifts (7) abgestimmt ist und wobei weitere Durchlassöffnungen (10) nach Art von Langlöchern derart ausgebildet sind, dass die weiteren Positioniermittel (7) der ersten Gehäuseschale (3) spielbehaftet in den weiteren Durchlassöffnungen (10) vorgesehen sind.

5. Beleuchtungsvorrichtung nach einem der vorangehenden Ansprüche, **dadurch gekennzeichnet, dass** von der zweiten Gehäuseschale (5) die zueinander beabstandeten und einander paarweise zugeordneten Kontaktelemente (12) abragen, welche im Bereich einer freien Stirnseite (14) einen sich verjüngenden Querschnitt aufweisen.

6. Beleuchtungsvorrichtung nach Anspruch 5, **dadurch gekennzeichnet, dass** die Kontaktelemente (12) im Bereich der freien Stirnseite (14) sich spitz und/oder keilförmig verjüngen.

7. Beleuchtungsvorrichtung nach Anspruch 1, **dadurch gekennzeichnet, dass** eine Stirnseite (14) der Kontaktelemente (12) in Bezug zu einer freien Stirnfläche des stegförmigen Verbindungsabschnitts (11) derart zurückversetzt angeordnet ist, dass zunächst ein Kontakt zwischen dem Verbindungsabschnitt (11) und der ersten Gehäuseschale (3) ausgebildet ist, während das Kontaktelement (12) beabstandet zu dem Schaltungsträger (1) vorgesehen ist.

8. Herstellungsverfahren für eine Beleuchtungsvorrichtung, nach einem der vorangehenden Ansprüche, wobei eine erste Gehäuseschale (3) mit einer zweiten Gehäuseschale (5) mittels Vibrationsschweißens verbunden wird und wobei ein Schaltungsträger (1) der Beleuchtungsvorrichtung mit wenigstens einer hieran festgelegten Lichtquelle (2) zwischen der ersten Gehäuseschale (3) und der zweiten Gehäuseschale (5) festgelegt wird, indem
• die zweite Gehäuseschale (5) mit einem bevorzugt stegförmigen Verbindungsabschnitt (11) an die erste Gehäuseschale (3) angelegt wird;
• Vibrationsschwingungen aufgeprägt werden und die erste Gehäuseschale (3) gegen die zweite Gehäuseschale (5) gedrückt wird, wodurch sich die zweite Gehäuseschale (5) im Bereich des Verbindungsabschnitts (11) mit der ersten Gehäuseschale (3) verbindet und eine Dickenabmessung des Verbindungsabschnitts (11) sich reduziert;
• der Schaltungsträger (1) durch an der zweiten Gehäuseschale (5) vorgesehene Kontaktelemente (12) an die andere Gehäuseschale (3) angedrückt wird.

9. Verfahren nach Anspruch 8, **dadurch gekennzeichnet, dass** die Kontaktelemente (12) während des Vibrationsschweißens aufgeschmolzen werden und/oder, dass eine Dickenabmessung der Kontaktelemente (12) während des Vibrationsschweißens abnimmt und/oder, dass sich die Kontaktelemente (12) mit einer dem Schaltungsträger (1) zugewandten Stirnseite (14) flächig an diesen anlegen.

10. Verfahren nach Anspruch 8 oder 9, **dadurch gekennzeichnet, dass** das Vibrationsschweißen in wenigstens zwei Prozessschritten erfolgt,
• wobei in einem ersten Prozessschritt die zweite Gehäuseschale (5) im Bereich des Verbindungsabschnitts (11) aufschmilzt und mit der ersten Gehäuseschale (3) stoffschlüssig verbunden wird, während die Kontaktelemente (12) beabstandet zu dem Schaltungsträger (1) vorgesehen sind und an den Schaltungsträger (1) angenähert werden, und
• wobei in einem zweiten Prozessschritt die erste Gehäuseschale (3) mit der zweiten Gehäuseschale (5) im Bereich des Verbindungsabschnitts (11) fortgesetzt verschweißt wird und zudem die Kontaktelemente (12) im Bereich der dem Schaltungsträger (1) zugewandten Stirnseite (14) infolge der Vibrationsschwingungen und des Kontakts mit dem Schaltungsträger (1) aufschmelzen.

11. Verfahren nach einem der Ansprüche 8 bis 10, **dadurch gekennzeichnet, dass** eine Frequenz für das Vibrationsschweißen 240 Hz oder mehr beträgt.

## Claims

1. Lighting device having a multi-part housing, having at least one light source (2) and having a circuit carrier (1) which carries the at least one light source (2) and is enclosed by the housing together with the at least one light source (2),
wherein the housing provides a first housing shell (3), against which the circuit carrier (1) is placed and on which at least one positioning means (7) is provided, via which the circuit carrier (1) is positioned relative to the first housing shell (3),
wherein the housing provides a second housing shell (5) which has on the edge side, at least in sections, a web-shaped connecting section (11) facing the first housing shell (3), and
wherein the first housing shell (3) and the second housing shell (5) are connected to one another in the region of the web-shaped connecting section (11), preferably in a materially bonded manner,
**characterized in that**
at least two contact elements (12) are provided on the second housing shell (5), which are arranged and dimensioned in such a way that the contact elements (12) press the circuit carrier (1) with the at least one light source (2) against the first housing shell (3),
at least two contact elements are assigned in pairs laterally adjacent to the positioning means, and
the positioning means (7) is provided between the two contact elements (12) assigned to each other in pairs.

2. Lighting device according to claim 1, wherein a lateral distance (17) of the positioning means (7) to the contact elements (12) is less than 1 cm, preferably less than 0.5 cm.

3. Lighting device according to any one of claims 1 or 2, wherein the positioning means (7) provided on the first housing shell (3) is designed in the manner of a positioning pin (7), and a passage opening (9, 10) is provided on the circuit carrier (1) for accommodating the positioning pin (7).

4. Lighting device according to any one of the preceding claims,
wherein a plurality of positioning pins (7) is provided on the first housing shell (3), and a plurality of passage openings (9, 10) is formed on the circuit carrier (1), wherein a first passage opening (9) is formed in the manner of a hole with a bore diameter which is matched to the dimension of an associated positioning pin (7), and wherein further passage openings (10) are designed in the manner of elongated holes in such a way that the further positioning means (7) of the first housing shell (3) are provided with play in the further passage openings (10).

5. Lighting device according to any one of the preceding claims,
wherein the contact elements (12), which are spaced apart from one another and assigned to one another in pairs, project from the second housing shell (5) and have a tapering cross section in the region of a free end face (14).

6. Lighting device according to claim 5, wherein the contact elements (12) taper in a pointed and/or wedge-shaped manner in the region of the free end face (14).

7. Lighting device according to claim 1, wherein an end face (14) of the contact elements (12) is arranged in a recessed manner with respect to a free end face of the web-shaped connecting section (11) in such a way that a contact is initially formed between the connecting section (11) and the first housing shell (3), while the contact element (12) is provided spaced apart from the circuit carrier (1).

8. Method for manufacturing a lighting device according to any one of the preceding claims, wherein a first housing shell (3) is connected to a second housing shell (5) by means of vibration welding, and wherein a circuit carrier (1) of the lighting device having at least one light source (2) fixed thereto is fixed between the first housing shell (3) and the second housing shell (5), such that
the second housing shell (5) is placed against the first housing shell (3) with a preferably web-shaped connecting section (11);
vibration oscillations are imposed and the first housing shell (3) is pressed against the second housing shell (5), as a result of which the second housing shell (5) is connected to the first housing shell (3) in the region of the connecting section (11) and a thickness dimension of the connecting section (11) is reduced;
the circuit carrier (1) is pressed against the other housing shell (3) by contact elements (12) provided on the second housing shell (5).

9. Method according to claim 8, wherein the contact elements (12) are melted during the vibration welding, and/or a thickness dimension of the contact elements (12) decreases during the vibration welding, and/or the contact elements (12) rest flatly against the circuit carrier (1) with an end face (14) facing the latter.

10. Method according to claim 8 or 9, wherein the vibration welding is performed in at least two process steps,
wherein, in a first process step, the second housing shell (5) melts in the region of the connecting section (11) and is connected to the first housing shell (3) in a materially bonded manner, while the contact elements (12) are provided at a distance from the circuit carrier (1) and are brought closer to the circuit carrier (1), and
wherein, in a second process step, the first housing shell (3) is continuously welded to the second housing shell (5) in the region of the connecting section (11) and, in addition, the contact elements (12) melt in the region of the end face (14) facing the circuit carrier (1) as a result of the vibration oscillations and the contact with the circuit carrier (1).

11. Method according to any one of claims 8 to 10, wherein a frequency for vibration welding is 240 Hz or more.

## Revendications

1. Dispositif d'éclairage avec un boîtier en plusieurs parties, avec au moins une source lumineuse (2) et avec un support de circuit (1) portant l'au moins une source lumineuse (2), qui est entouré par le boîtier avec l'au moins une source lumineuse (2),
dans lequel le boîtier comporte une première coque de boîtier (3) sur laquelle est appliquée le support de circuit (1) et sur laquelle est prévu au moins un moyen de positionnement (7) par lequel le support de circuit (1) est positionné par rapport à la première coque de boîtier (3),
dans lequel le boîtier comporte une deuxième coque de boîtier (5) qui présente sur le bord, éventuellement par zones, une partie d'assemblage (11) en forme de barrette tournée vers la première coque de boîtier (3), et
dans lequel la première partie de boîtier (3) et la deuxième partie de boîtier (5) sont assemblées entre elles, de préférence, par solidarité de matière,
**caractérisé en ce que**
au moins deux éléments de contact (12) sont prévus sur la deuxième coque de boîtier (5) et sont disposés et dimensionnés de telle manière que les éléments de contact (12) pressent le support de circuit (1) avec l'au moins une source lumineuse (2) contre la première coque de boîtier (3) ;
deux éléments de contact sont disposés en paire sur les côtés au voisinage du moyen de positionnement et
le moyen de positionnement (7) est prévu entre les deux éléments de contact (12) associés l'un à l'autre en paire.

2. Dispositif d'éclairage selon la revendication 1, **caractérisé en ce qu'**un écartement latéral (17) entre le moyen de positionnement (7) et les éléments de contact (12) mesure moins de 1 cm, de préférence moins de 0,5 cm.

3. Dispositif d'éclairage selon l'une des revendications 1 ou 2, **caractérisé en ce que** le moyen de positionnement (7) prévu sur la première coque de boîtier (3) est conformé comme une goupille de positionnement (7) et **en ce qu'**une ouverture de passage (9, 10) est prévue sur le support de circuit (1) pour recevoir la goupille de positionnement (7).

4. Dispositif d'éclairage selon l'une des revendications précédentes, **caractérisé en ce que** plusieurs goupilles de positionnement (7) sont prévues sur la première coque de boîtier (3) et **en ce que** plusieurs ouvertures de passage (9, 10) sont formées sur le support de circuit (1), une première ouverture de passage (9) étant formée comme un trou percé, avec un diamètre de perçage adapté à la dimension d'une goupille de positionnement (7) associée, et plusieurs ouvertures de passage (10) étant formées comme des trous oblongs, de telle manière que les autres moyens de positionnement (7) de la première coque de boîtier (3) soient prévus avec un jeu dans les autres ouvertures de passage (10).

5. Dispositif d'éclairage selon l'une des revendications précédentes, **caractérisé en ce que** les éléments de contact (12) écartés l'un de l'autre et associés l'un à l'autre en paire dépassent de la deuxième coque de boîtier (5) et présentent au niveau d'une face d'extrémité libre (14) une section qui se resserre.

6. Dispositif d'éclairage selon la revendication 5, **caractérisé en ce que** les éléments de contact (12) se resserrent en pointe et/ou en coin au niveau de la face d'extrémité libre (14).

7. Dispositif d'éclairage selon la revendication 1, **caractérisé en ce qu'**une face d'extrémité (14) des éléments de contact (12) est en retrait par rapport à une face d'extrémité libre de la partie d'assemblage (11) en forme de barrette, de telle sorte qu'un contact s'établit d'abord entre la partie d'assemblage (11) et la première coque de boîtier (3) tandis que l'élément de contact (12) est prévu à distance du support de circuit (1).

8. Procédé de fabrication d'un dispositif d'éclairage selon l'une des revendications précédentes, dans lequel une première coque de boîtier (3) est assemblée avec une deuxième coque de boîtier (5) au moyen d'un soudage par vibration et dans lequel un support de circuit (1) du dispositif d'éclairage sur lequel est fixé au moins une source lumineuse (2) est fixé entre la première coque de boîtier (3) et la deuxième coque de boîtier (5) par le fait que
la deuxième coque de boîtier (5) est posée sur la première coque de boîtier (3) avec une partie d'assemblage (11) de préférence en forme de barrette ;
des vibrations sont appliquées et la première coque de boîtier (3) est pressée contre la deuxième coque de boîtier (5), de sorte que la deuxième coque de boîtier (5) s'assemble à la première coque de boîtier (3) au niveau de la partie d'assemblage (11) et une dimension d'épaisseur de la partie d'assemblage (11) diminue ;
le support de circuit (1) est pressé sur l'autre coque de boîtier (3) par des éléments de contact (12) prévus sur la deuxième coque de boîtier (5).

9. Procédé selon la revendication 8, **caractérisé en ce que** les éléments de contact (12) sont fondus pendant le soudage par vibration et/ou **en ce qu'**une dimension d'épaisseur des éléments de contact (12) diminue pendant le soudage par vibration et/ou **en ce que** les éléments de contact (12) reposent à plat sur le support de circuit (1) par une face d'extrémité (14) tournée vers le support de circuit (1).

10. Procédé selon la revendication 8 ou 9, **caractérisé en ce que** le soudage par vibration s'effectue en au moins deux étapes de processus,
dans lequel la deuxième coque de boîtier (5) fond au niveau de la partie d'assemblage (11) dans une première étape de procédé et est assemblée par solidarité de matière à la première coque de boîtier (3), tandis que les éléments de contact (12) prévus à distance du support de circuit (1) sont rapprochés du support de circuit (1), et
dans lequel le soudage de la première coque de boîtier (3) avec la deuxième coque de boîtier (5) se poursuit au niveau de la partie d'assemblage (11) dans une deuxième étape de procédé et les éléments de contact (12) fondent en outre au niveau de la face d'extrémité (14) tournée vers le support de circuit (1) sous l'effet des vibrations et du contact avec le support de circuit (1).

11. Procédé selon l'une des revendications 8 à 10, **caractérisé en ce que** la fréquence du soudage par vibration est de 240 Hz ou plus.
